# EUROPEAN PATENT APPLICATION

(11) **EP 4 249 298 A1**
(43) Date of publication of application: **27.09.2023**
(21) Application number: 21936287.8
(22) Date of filing: 12.04.2021
(51) Int. Cl.: B60J 5/04

(54) **ANTI-THEFT CAR LOCK BRACKET, CAR DOOR, AND CAR**

(71) Applicant: Zhejiang Geely Holding Group Co., Ltd., Hangzhou, Zhejiang 310000 (CN); Geely Automobile Research Institute (Ningbo) Co., Ltd, Ningbo, Zhejiang 315000 (CN)
(72) Inventor: FU, Qingji, Hangzhou, Zhejiang 310000 (CN); CHEN, Dingfang, Hangzhou, Zhejiang 310000 (CN)
(74) Representative: Osterhoff, Utz
(86) International application number: PCT/CN2021/086356
(87) International publication number: WO 2022/217390

(57) **Abstract**

Disclosed are an anti-theft bracket for automobile lock (10), an automobile door (20) and an automobile. The anti-theft bracket for automobile lock (10) includes a first protective plate (11), a second protective plate (12) and a connecting plate (13). The first protective plate (11) is provided side by side with the second protective plate (12). The connecting plate (13) is configured to connect a lower end of the first protective plate (11) with a lower end of the second protective plate (12). The connecting plate (13) is installed under a connection between a lock core rod and a lock body inside the automobile door, the first protective plate (11) is installed on a side of the lock core rod, and the second protective plate (12) is installed on a side of the lock core rod away from the first protective plate (11). The anti-theft bracket for automobile lock (10) may improve the anti-theft capacity of a car door lock.

## Description

### TECHNICAL FIELD

The present disclosure relates to the technical field of anti-theft vehicle door lock, and in particular, to an anti-theft bracket for automobile lock, an automobile door and an automobile.

### BACKGROUND

At present, the automobile door usually includes a door body, a door lock provided inside the door body, a retractable door glass installed in the door body and a waterproof tape installed between the door glass and the door body. However, the waterproof tape is easy to be destroyed, and after the waterproof tape is destroyed, a hook and other theft tools may enter into the door body through the gap between the door glass and the door body. Thus, the hook or other theft tools may hook up or abut against the lock core rod to drive the lock core rod to move, thereby to open the door lock. That is to say, the current anti-theft capacity of the automobile door is generally low, the risk of theft is high. Thus, it is difficult to ensure the safety of the use's property.

### SUMMARY

The present disclosure aims to provide an anti-theft bracket for automobile lock to improve the anti-theft capacity of automobile door locks.

In order to achieve the above objective, the present disclosure provides An anti-theft bracket for automobile lock installed at an automobile door including a first protective plate, a second protective plate provided side by side with the first protective plate, and a connecting plate configured to connect a lower end of the first protective plate with a lower end of the second protective plate. The connecting plate is installed under a connection between a lock core rod and a lock body inside the automobile door, the first protective plate is installed on a side of the lock core rod, and the second protective plate is installed on a side of the lock core rod away from the first protective plate.

In some embodiments, the second protective plate obliquely extends in a direction away from the connecting plate and toward a direction gradually away from the first protective plate.

In some embodiments, the first protective plate includes a baffle plate and a guide plate. A lower end of the baffle plate is connected with the connecting plate and a lower end of the guide plate is connected with an upper end of the baffle plate. The guide plate extends obliquely toward a direction where the second protective plate is located in a direction away from the connecting plate.

In some embodiments, at least one of the first protective plate and the second protective plate is provided with a hook structure, the hook structure is located above the connection between the lock core rod and the lock body, and the hook structure is configured to be hooked by a lockpicking tool to create an illusion that the connection between the lock core rod and the lock body is hooked up.

In some embodiments, the hook structure on the first protective plate is a hook hole penetrating through the first protective plate.

In some embodiments, the first protective plate is provided with a limiting plate at a lower wall of the hook hole. The limiting plate is provided on a side of the first protective plate facing the second protective plate and is provided above the connection between the lock core rod and the lock body, to prevent the lockpicking tool from entering into a place between the first protective plate and a second protective plate from the hook hole.

In some embodiments, the anti-theft bracket for automobile lock is made from a sheet metal, the hook hole and the limiting plate are formed by stamping the second protective plate, and the limiting plate is made from a plate material corresponding to the hook hole in the second protective plate.

In some embodiments, the first protective plate is provided with a locking portion and a positioning portion distributed at intervals in a vertical direction, and the positioning portion is configured to position when installed in the automobile door and the locking portion is configured to fix on the automobile door; or the first protective plate is provided with a locking portion and the second protective plate is provided with a positioning portion, and the positioning portion is configured to position when installed in the automobile door and the locking portion is configured to fix on the automobile door.

In some embodiments, the positioning portion includes an extending section and an inserting section. An end of the extending section is connected with a side edge of either the first protective plate or the second protective plate, the inserting section is connected with the other end of the extending section and extends downward, and the inserting section is configured to insert into the automobile door.

In some embodiments, the locking portion is provided with a mounting hole for connecting with the automobile door by screws or rivets.

In some embodiments, an end of the positioning portion is connected with a side edge of the first protective plate, and the other end of the positioning portion extends toward the second protective plate; or an end of the positioning portion is connected with a side edge of the second protective plate, and the other end of the positioning portion extends toward the first protective plate.

In some embodiments, the locking portion is connected with a side edge of the first protective plate and extends toward the second protective plate.

The present disclosure further provides an automobile door including a door body, a lock body, a lock core rod and the above-mentioned anti-theft bracket for automobile lock. Both the lock body and the lock core rod are provided inside the door body and the lock core rod is connected with the lock body. A connecting plate of the anti-theft bracket for automobile lock is installed under a connection between the lock core rod and the lock body, a first protective plate of the anti-theft bracket for automobile lock is installed on a side of the lock core rod close to the lock body, and a second protective plate of the anti-theft bracket for automobile lock is installed on a side of the lock core rod away from the first protective plate.

In some embodiments, the door body is provided with a shielding plate on a side of the lock core rod away from the first protective plate, the shielding plate extends along a height direction of the door body, and an upper end of the second protective plate extends between the shielding plate and lock core rod.

The present disclosure further provides an automobile including the above-mentioned automobile door.

The anti-theft bracket for automobile lock provided by the present disclosure includes a first protective plate, a second protective plate and a connecting plate. The connecting plate connects a lower end of the first protective plate with a lower end of the second protective plate. The first protective plate and the second protective plate are provided side by side. In this way, when the anti-theft bracket is installed in the automobile door, the first protective plate and the second protective plate are respectively provided on the two opposite sides of the lock core rod in the direction of the width of the door, and the connecting plate is provided under the connection of the lock core rod and the lock body inside the automobile door. Thus, both sides of the lock core rod, and both sides of the connection between the lock core rod and the lock body may be effectively covered by the first protective plate and the second protective plate. In addition, the lower side of the connection between the lock core rod and the lock body may be effectively covered by the connecting plate, thereby to effectively prevent others from using tools such as endoscopes to observe the position and structure of the lock core rod and to prevent the lock core rod from being hooked or abutted against by some lockpicking tools, such as hooks. Therefore, the structure may greatly improves the anti-theft capacity of the automobile door and reduces the risk of theft of automobiles and properties inside the automobile.

### BRIEF DESCRIPTION OF THE DRAWINGS

In order to more clearly illustrate the technical solutions in the embodiments of the present disclosure, drawings in the embodiments will be briefly described below. Obviously, the drawings in the following description are only some embodiments of the present disclosure. Other drawings can be obtained by those skilled in the art according to the structures shown in the drawings without creative work.
FIG. 1 is a schematic structural view of an anti-theft bracket for automobile lock according to some embodiments of the present disclosure.
FIG. 2 is a schematic structural view of an automobile door according to some embodiments of the present disclosure.
FIG. 3 is an enlarged view at portion A in FIG. 2.

### Description of reference signs

| | | | |
|---|---|---|---|
| Reference sign | Name | Reference sign | Name |
| 10 | anti-theft bracket for automobile lock | 14 | locking portion |
| 11 | first protective plate | 15 | positioning portion |
| 111 | baffle plate | 151 | extending section |
| 112 | guide plate | 152 | inserting section |
| 113 | hook hole | 20 | automobile door |
| 114 | limiting plate | 21 | lock body |
| 12 | second protective plate | 22 | lock core rod |
| 13 | connecting plate | 23 | shielding plate |

The implementation, functional characteristics and advantages of the present disclosure will be further described with reference to the attached drawings in combination with embodiments.

### DETAILED DESCRIPTION OF THE EMBODIMENTS

The technical solutions of embodiments of the present disclosure will be clearly and completely described with reference to the drawings of the present disclosure. Obviously, the described embodiments are only some rather than all of the embodiments of the present disclosure. Based on the embodiments of the present disclosure, all other embodiments obtained by those skilled in the art without creative efforts shall fall within the scope of the present disclosure.

It should be noted that all directional indicators (such as up, down, left, right, front, rear, etc.) in the embodiments of the present disclosure are only used to explain the relative positional relationship, movement situation, etc. among components in a specific attitude (as shown in the drawings). If the specific attitude changes, the directional indication also changes accordingly.

In addition, the descriptions related to "first", "second" and the like in the present disclosure are merely for descriptive purposes, and should not be understood as indicating or implying their relative importance or implicitly indicating the number of technical features indicated. Therefore, the features defined by "first" and "second" may explicitly or implicitly include at least one such feature. The meaning of "and/or" appearing in the whole text is the same, and it means to include three parallel plans, taking "A and/or B as an example", including plan A, or plan B, or a plan in which A and B are satisfied at the same time. Besides, the various embodiments can be combined with each other, but the combination must be based on what can be achieved by those skilled in the art. When the combination of the embodiments is contradictory or cannot be achieved, it should be considered that such combination does not exist, or is not within the scope of the present disclosure.

The present disclosure provides an anti-theft bracket for automobile lock installed at an automobile door, specifically installed by the lock core rod inside the door body to cover the lock core rod.

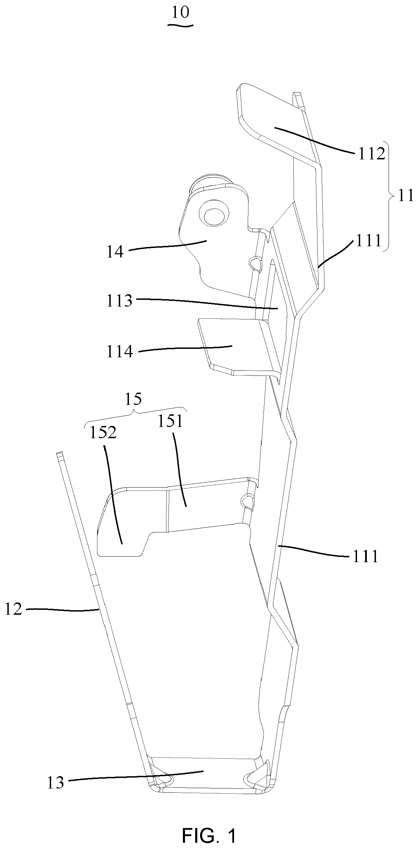

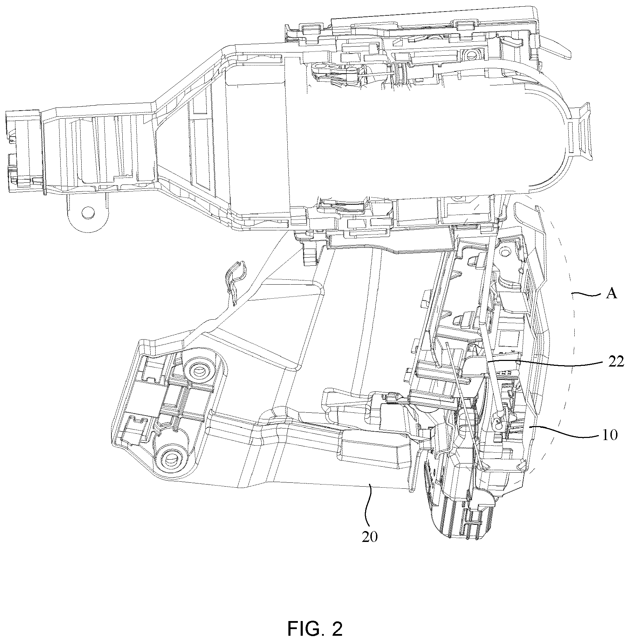

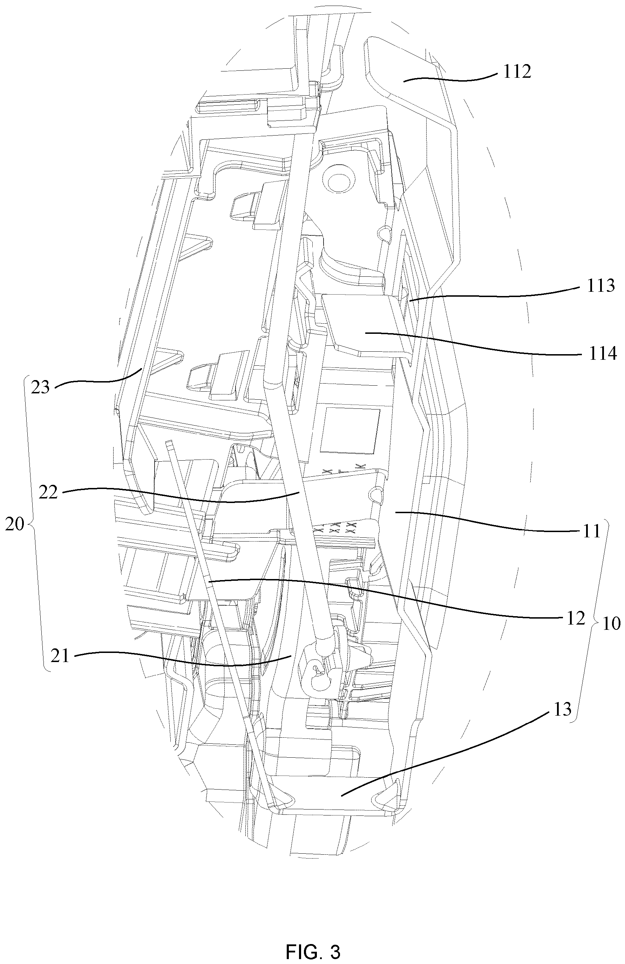

In some embodiments of the present disclosure, as shown in FIG. 1, the anti-theft bracket for automobile lock 10 includes a first protective plate 11, a second protective plate 12 and a connecting plate 13. The first protective plate 11 and the second protective plate 12 are provided side by side, and the connecting plate 13 connects the lower end of the first protective plate 11 and the lower end of the second protective plate 12. The connecting plate 13 is installed under the connection between the lock core rod 22 and the lock body 21 in the automobile door 20 (refer to FIG. 2 and FIG. 3), the first protective plate 11 is installed on one side of the lock core rod 22, and the second protective plate 12 is installed on the side of the lock core rod 22 away from the first protective plate 11.

For ease of description, in these embodiments, for example, the anti-theft bracket for automobile lock 10 is applied to a pull-out door (a side of the pull-out door is rotatably connected to the body of the automobile, and the other side is provided with a door lock). For other examples, the anti-theft bracket for automobile lock 10 which is not limited thereto, can also be applied to side sliding doors and the like.

In these embodiments, when the anti-theft bracket for automobile lock 10 is installed on the automobile door 20, the first protective plate 11 and the second protective plate 12 are provided in the width direction of the automobile door 20 (when the automobile door 20 is installed on the automobile body and when the door is closed, the width direction of the automobile door 20 is roughly the front-rear direction of the automobile body), and both extend along the height direction of the automobile door 20 (the up-down direction). Both extend along the thickness direction of the automobile door 20. The connecting plate 13 is installed under the connection of the lock core rod 22 and lock body 21 in the automobile door 20, and the first protective plate 11 extends upwards from connecting plate 13 along lock core rod 22, such that first protective plate 11 can cover a side of the connection between the lock core rod 22 and the lock body 21, and cover one side of the lock core rod 22. The second protective plate 12 extends upward from the connecting plate 13 along the lock core rod 22 to install on and cover a side of the lock core rod 22 away from the first protective plate 11. That is to say, the first protective plate 11 and the second protective plate 12 are provided on two opposite sides of the lock core rod 22 in the width direction of the automobile door 20. It should be noted that the first protective plate 11 and the second protective plate 12 are provided side by side, which means that the surface of the first protective plate 11 and the surface of the second protective plate 12 are arranged side by side, and which does not make the first protective plate 11 parallel to the second protective plate 12. That is to say, the second protective plate 12 can be inclined relative to the first protective plate 11, or can be parallel to the first protective plate 11.

In some embodiments, the length of the first protective plate 11 can be set according to the length of the lock core rod 22 and the structure in the automobile door 20, for example, when there are parts above the first protective plate 11 in the automobile door 20 to cover the side of the lock core rod 22, the upper end of the first protective plate 11 extends to the bottom of the part, which may ensure that the first protective plate 11 can effectively cover the side of the lock core rod 22 and may effectively prevent the lockpicking tool from hooking or abutting against the lock core rod 22. Likewise, the length of the second protective plate 12 can also be set according to the length of the lock core rod 22 and the structure inside the door 20. In some embodiments, the second protective plate 12 can also only cover the connection between the lock core rod 22 and the lock body 21. The size of the first protective plate 11 and the second protective plate 12 in the thickness direction of the automobile door 20 can be set according to the size of the inner cavity of the automobile door 20 in its thickness direction.

The shape and size of the connecting plate 13 are not limited in the present disclosure, and the connecting plate 13 may be in the shape of a flat plate, an arc plate or the like. The anti-theft bracket for automobile lock 10 can be made of metals, plastics or composite materials, etc., and can be set according to requirements, which is not limited in the present disclosure.

The anti-theft bracket for automobile lock 10 of the technical solution of the present disclosure includes a first protective plate 11, a second protective plate 12 and a connecting plate 13. The connecting plate 13 connects the lower end of the first protective plate 11 and the lower end of the second protective plate 12, and the first protective plate 11 and the second protective plate 12 are provided side by side. In this way, when the anti-theft bracket for automobile lock 10 is installed on the automobile door 20, the first protective plate 11 and the second protective plate 12 can be separately provided on two opposite sides of the lock core rod 22 in the width direction of the automobile door 20, and the connecting plate 13 is provided below the connection between the lock core rod 22 and the lock body 21 in the automobile door 20, thereby to make the first protective plate 11 and the second protective plate 12 effectively cover two opposite sides of the lock core rod 22, two opposite sides of the connection between the lock core rod 22 and the lock body 21. In addition, the connecting plate 13 can cover the lower side of the connection between the lock core rod 22 and the lock body 21, which can effectively prevent others from using tools such as endoscopes to observe the position and structure of the lock core rod 22, and can also effectively prevent others from hooking or abutting against the lock core rod 22 by lockpicking tools such as hooks, thereby to greatly improve the anti-theft capability of the automobile door 20 lock and reduce the risk of the automobile and its contents being stolen.

Moreover, compared with the anti-theft bracket that completely wraps the lock core rod 22, the anti-theft bracket for automobile lock 10 in the present disclosure has a simple and reliable structure, which is beneficial to reduce cost and weight. In addition, because in some countries and regions (such as the European Union), the corresponding automobile insurance premiums are lower for vehicles with higher anti-theft levels, such that the anti-theft bracket for automobile lock 10 is used to increase the vehicle anti-theft level, which is beneficial to reduce the automobile insurance premiums and enhance market competitiveness.

In some embodiments, the second protective plate 12 gradually extends obliquely in a direction away from the connecting plate 13 and toward a direction away from the first protective plate 11. That is to say, the second protective plate 12 is inclined in the height direction of the automobile door 20, such that the lock core rod 22 can be prevented from interfering with the second protective plate 12 when moving. In addition, the lockpicking tools such hooks may be guided away from the lock core rod 22. In other embodiments, the second protective plate 12 may also extend along the height direction of the automobile door 20.

In some embodiments, the first protective plate 11 includes a baffle plate 111 and a guide plate 112. The lower end of the baffle plate 111 is connected to the connection plate 13, the lower end of the guide plate 112 is connected to the upper end of the baffle plate 111, and the guide plate 112 gradually obliquely extends in the direction away from the connecting plate 13 and toward the second protective plate 12. That is to say, when the anti-theft bracket for automobile lock 10 is installed in the automobile door 20, the guide plate 112 extends from the upper end of the baffle plate 111 and toward the lock core rod 22, such that the gap between the upper end of the guide plate 112 and the lock core rod 22 can be reduced, thereby to reduce the possibility of lockpicking tools such as hooks being inserted from the gap between the lock core rod 22 and the upper end of the guide plate 112. In addition, when lockpicking tools such as hooks move downward and abut against the guide plate 112, the guide plate 112 can lead the lockpicking tools such as hooks toward the direction away from the lock core rod 22, thereby to further enhance the security capability of the anti-theft bracket for automobile lock 10 to the lock core rod 22 and the anti-theft capability of the automobile door 20. In addition, since only the guide plate 112 needs to be provided on the upper end of the first protective plate 11, the space requirement in the automobile door 20 is relatively small, such that the shape of the baffle plate 111 can be adapted according to other structures in the automobile door 20, thereby to make full use of the space of the automobile door 20 and improve the compact structure of automobile door 20. In other embodiments, the first protective plate 11 can also be provided obliquely as a whole, that is to say, the first protective plate 11 gradually obliquely extends in the direction away from the connecting plate 13 and toward the second protective plate 12.

In some embodiments, at least one of the first protective plate 11 and the second protective plate 12 is provided with a hook structure, the hook structure is located above the connection between the lock core rod 22 and the lock body 21, and the hook structure is configured to be hooked by a lockpicking tool to create an illusion that the connection between the lock core rod 22 and the lock body 21 is hooked up by the lockpicking tool. That is to say, the hook structure is at least partly located on the surface of the first protective plate 11 away from the second protective plate 12, such that when a lockpicking tool such as a hook is inserted into the side of the first protective plate 11 away from the second protective plate 12, the hook structure can be hooked up by the lockpicking tools such as hooks, thus, the lockpicker can mistakenly think that the key picking point has been found, thereby to prolong the time of theft, which is conducive to further improving the anti-theft effect. In other embodiments, no hook structure may be provided.

In some embodiment, the hook structure on the first protective plate 11 is set as a hook hole 113, and the hook hole 113 penetrates through the first protective plate 11, that is to say, the hook hole 113 is a through-hole structure and runs through the surface of the first protective plate 11 facing the second protective plate 12 and the surface of the first protective plate 11 away from the second protective plate 12. When the lockpicking tools such as hooks stretch into the hook hole 113 and move upward, the lockpicking tools such as hooks can be hooked on the hole wall of the hook hole 113, thereby to make the lockpicking tools such as hooks hooked to the hook structure. The hook hole 113 provided in this way has a simple and reliable structure, and is conducive to reducing the weight of the anti-theft bracket for automobile lock 10. In other embodiments, the hook structure provided on the surface of the first protective plate 11 away from the second protective plate 12 can be a pull ring structure, a raised structure, a downward bent flange structure, or other hook structures that can be hooked. Likewise, the hook structure on the second protective plate 12 can also be set as a hook hole (the hook hole on the second protective plate 12 is not shown), and the hook hole on the second protective plate 12 penetrates through the second protective 12.

In some embodiments, the first protective plate 11 is provided with a limiting plate 114 at the lower hole wall of the hook hole 113, the limiting plate 114 is provided on the side of the first protective plate 11 facing the second protective plate 12, and the limiting plate 114 is located above the connection between the lock core rod 22 and the lock body 21 to limit the lockpicking tool from extending from the hook hole 113 into a place between the first protective plate 11 and the second protective plate 12. That is to say, when the hook hole 113 is provided, lockpicking tools such as hooks may extend from the hook hole 113 into a place between the first protective plate 11 and the second protective plate 12 (between the lock core rod 22 and the first protective plate 11), and after the limiting plate 114 is provided at the lower hole wall of the hook hole 113 and above the connection of the lock core rod 22 and the lock body 21, the lock picking tools such as hooks extending from the hook hole 113 may abut against the upper surface of the limiting plate 114, thereby to restrict lockpicking tools such as hooks from entering into a place between the first protective plate 11 and the second protective plate 12. In other embodiments, it is also possible to provide an inclined section on the second protective plate 12 (baffle plate 111), and the inclined section gradually extends in the direction away from the connecting plate 13 and toward the first protective plate 11. The hook hole 113 is provided in the inclined section, thereby to ensure that the upper hole wall of the hook hole 113 can be hooked by the lockpicking tools such as hooks, and to prevent the lockpicking tools such as hooks from extending into the hook hole 113 during the downward movement.

Likewise, in some embodiments, the second protective plate 12 is also provided with a limiting plate at the lower hole wall of the hook hole (the limiting plate on the second protective plate 12 is not shown in the drawings), the limiting plate on the second protective plate 12 is provided at a side of the second protective plate 12 facing the first protective plate 11, and is located above the connection of the lock core rod 22 and the lock body 21, thereby to prevent the lockpicking tools from entering into a place between the first protective plate 11 and the second protective plate 12 through the hook hole on the second protective plate 12. That is to say, when the hook structure on the second protective plate 12 is set as a hook hole, the lockpicking tools such as hooks may extend from the hook hole on the second protective plate 12 into a place between the first protective plate 11 and the second protective plate 12 (between the lock core rod 22 and the first protective plate 11), and after the limiting plate is provided at the lower hole wall of the hook hole and above the connection of the lock core rod 22 and the lock body 21, the lock picking tools such as hooks extending from the hook hole on the second protective hole may abut against the upper surface of the limiting plate on the second protective plate 12, thereby to restrict lockpicking tools such as hooks from entering into a place between the first protective plate 11 and the second protective plate 12.

In some embodiments, the anti-theft bracket for automobile lock 10 is made from a sheet metal part, the hook hole 113 and the limiting plate 114 are formed by stamping the second protective plate 12, and the limiting plate 114 is made from a plate material corresponding to the hook hole 113 on the second protective plate 12. That is to say, when the hook hole 113 is formed by stamping, the stamping die is not provided with a stamping edge at the position corresponding to the lower hole wall of the hook hole 113, such that the stamping material at the hook hole 113 is connected to the lower hole wall of the hook hole 113, thereby to ensure that the sheet material corresponding to the hook hole 113 on the second protective plate 12 does not fall off to form a limiting plate 114. In this way, the plate material corresponding to the hook hole 113 on the second protective plate 12 can be used to form the limiting plate 114, which can avoid the situation of adding a limiting plate 114 on the second protective plate 12, thereby to simplify the molding process, reduce the process steps, reduce the generation of waste, save resources and reduce costs. In other embodiments, the limiting plate 114 can also be welded on the second protective plate 12, or the anti-theft bracket for automobile lock 10 can also be made from plastics or composite materials.

In some embodiments, the first protective plate 11 is provided with a locking portion 14 and a positioning portion 15. The locking portion 14 and the positioning portion 15 are provided at intervals in the vertical direction, and the positioning portion 15 is used for positioning when installed in the automobile door 20. The locking portion 14 is used for fixing with the automobile door 20. That is to say, the anti-theft bracket for automobile lock 10 can be fixed on the door body of the automobile door 20 through the locking portion 14, thereby to prevent the anti-theft bracket for automobile lock 10 from moving on the door body. In addition, before the locking portion 14 is fixed on the door body, the positioning portion 15 can be installed on the installation position on the door body to ensure that the anti-theft bracket for automobile lock 10 is accurately installed on the door body. In addition, the positioning portion 15 can limit the part of first protective plate 11 away from the locking portion 14 moves relative to the door body, thereby to ensure the overall stability of connection of the anti-theft bracket for automobile lock 10. The positioning portion 15 can be provided above the locking portion 14 or can be provided under the locking portion 14.

In other embodiments, the first protective plate 11 is provided with a locking portion 14, and the second protective plate 12 is provided with a positioning portion 15. The positioning portion 15 is used for positioning and installation with the automobile door 20, and the locking portion 14 is used for fixing with the automobile door 20. In this way, the first protective plate 11 can be fixed by the locking portion 14, and the second protective plate 12 can be limited by the positioning portion 15, such that the connection stability between the first protective plate 11 and the second protective plate 12 is better, and it is beneficial to improve the installation reliability of the anti-theft bracket for automobile lock 10.

In some embodiments, the positioning portion 15 includes an extending section 151 and an inserting section 152. One end of the extending section 151 is connected to a side of either of the first protective plate 11 or the second protective plate 12. The inserting section 152 is connected to the other end of the second protective plate 12 and extends downward, and the inserting section 152 is used for inserting into the automobile door 20. That is to say, when the positioning portion 15 is provided on the first protective plate 11, one end of the extending section 151 is connected to a side of the first protective plate 11, and the inserting section 152 is connected to an end of the extending section 151 away from the first protective plate 11. When the positioning portion 15 is provided on the second protective plate 12, one end of the extending section 151 is connected to a side of the second protective plate 12, and the inserting section 152 is connected to an end of the extending section 151 away from the second protective plate 12.

That is to say, the positioning portion 15 is connected to a side of the first protective plate 11 or the second protective plate 12, and is bent downward. When the anti-theft bracket for automobile lock 10 is installed on the door body of the automobile door 20, the inserting section 152 can be inserted into the insertion groove of the door body. In this way, the anti-theft bracket for automobile lock 10 can be positioned, and the locking portion 14 can also be positioned when fixing on the door body, which can effectively prevent the anti-theft bracket for automobile lock 10 from moving when the locking portion 14 is fixed on the door body. In addition, in the process of installing the anti-theft bracket for automobile lock 10, only the positioning portion 15 needs to be plugged with the door body, which can reduces the connection process between the anti-theft bracket for automobile lock 10 and the door body, and is conducive to simplifying the installation process. In other embodiments, the positioning portion 15 can also be a through-hole structure, and a positioning column can be provided on the door corresponding to the positioning portion 15.

In some embodiments, one end of the positioning portion 15 is connected to a side of either the first protective plate 11 or the second protective plate 12, and the other end of the positioning portion 15 extends toward the other protective plate. That is to say, when the positioning portion 15 is provided on the second protective plate 12, the extending section 151 extends toward the direction where the first protective plate 11 is located, and when the positioning portion 15 is provided on the first protective plate 11, the extending section 151 extends toward the direction where the second protective plate 12 is located. In this way, the space between the first protective plate 11 and the second protective plate 12 can be utilized, and the space occupied by the anti-theft bracket for automobile lock 10 inside the automobile door 20 can be reduced, thereby to improve the structural compactness of the automobile door 20. The inserting section 152 and the extending section 151 may be in the shape of a plate or a column, and the like.

In some embodiments, the locking portion 14 is connected to a side of the first protective plate 11 and extends towards the second protective plate 12. That is to say, the locking portion 14 extends toward the direction where the second protective plate 12 is located, such that the space between the first protective plate 11 and the second protective plate 12 can be utilized, and the space occupied by the anti-theft bracket for automobile lock 10 in the automobile door 20 can be reduced. Therefore, it is beneficial to improve the structural compactness of the automobile door 20.

In some embodiments, the locking portion 14 is provided with a mounting hole for connecting to the automobile door 20 by screws or rivets, which can ensure reliable connection between the locking portion 14 and the door body of the automobile door 20, ensure the installation stability of the anti-theft bracket for automobile lock 10, and ensure a reliable anti-theft capability. In other embodiments, the locking portion 14 may also be welded to the door body of the automobile door 20.

As shown in FIG. 2 and FIG. 3, the present disclosure also provides an automobile door 20, and the automobile door 20 includes a door body, a lock body 21, a lock core rod 22 and anti-theft bracket for automobile lock 10. The specific structure of the anti-theft bracket for automobile lock 10 refers to the above-mentioned embodiments. Because the automobile door 20 adopts all the technical solutions of all the above-mentioned embodiments, it at least has all the beneficial effects brought by the technical solutions of the above-mentioned embodiments, which will not be repeated here. The lock body 21 and lock core rod 22 are all provided inside the door body, and lock core rod 22 is connected with lock body 21. the connecting plate 13 of the anti-theft bracket for automobile lock 10 is installed under a connection between the lock core rod 22 and the lock body 21, the first protective plate 11 of the anti-theft bracket for automobile lock 10 is installed on a side of the lock core rod 22 close to the lock body 21, and a second protective plate 12 of the anti-theft bracket for automobile lock 10 is installed on a side of the lock core rod 22 away from the first protective plate 11.

When the anti-theft bracket for automobile lock 10 is adopted to install on the door body, the first protective plate 11 and the second protective plate 12 can be separately provided on two opposite sides of the lock core rod 22 in the width direction of the automobile door 20, and the connecting plate 13 is provided below the connection between the lock core rod 22 and the lock body 21 in the automobile door 20. In this way, the first protective plate 11 and the second protective plate 12 may effectively cover two opposite sides of the lock core rod 22, and two opposite sides of the connection between the lock core rod 22 and the lock body 21. In addition, the connecting plate 13 may effectively cover the lower side of the connection between the lock core rod 22 and the lock body 21, thereby to effectively prevent others from using tools such as endoscopes to observe the position and structure of the lock core rod 22 and to prevent the lock core rod 22 from being hooked or abutted against by some lockpicking tools, such as hooks. Therefore, the structure may greatly improves the anti-theft capacity of the automobile door 20 and reduces the risk of the automobile and objects inside the automobile being stolen.

In some embodiments, the door body is provided with a shielding plate 23 on the side of the lock core rod 22 away from the first protective plate 11, the shielding plate 23 extends along the height direction of the automobile door 20, and the upper end of the second protective plate 12 extends into a place between the shielding plate 23 and the lock core rod 22. In some embodiments, the shielding plate 23 can be provided on the inner panel of the vehicle door 20, or can be provided on the multifunctional bracket in the automobile door 20 or other structures in the automobile door 20. By providing the shielding plate 23, when someone else uses a lock picking tool such as a hook to extend into the automobile door 20 from the gap between the glass and the door body of the automobile door 20, the lock picking tool such as the hook can move downward along a side of the shielding plate 23 away from the lock core rod 22, and the lockpicking tool such as the hook may be at the side of the second protective plate 12 away from the lock core rod 22, thereby to prevents the lockpicking tool such as the hook from being inserted between the second protective plate 12 and the lock core rod 22. In other embodiments, the shielding plate 23 may not be provided.

The present disclosure further provides an automobile including an automobile body and an automobile door 20. The specific structure of the automobile door 20 refers to the above-mentioned embodiments. Because the automobile adopts all the technical solutions of all the above-mentioned embodiments, it at least has all the beneficial effects brought by the technical solutions of the above-mentioned embodiments, which will not be repeated here. The automobile door is provided on the automobile body.

Finally, it should be noted that the above are only some embodiments of the present disclosure, and do not limit the scope of the present disclosure thereto. Under the concept of the present disclosure, equivalent structural transformations made according to the description and drawings of the present disclosure, or direct/indirect disclosure in other related technical fields are included in the scope of the present disclosure.

## Claims

1. An anti-theft bracket for automobile lock installed at an automobile door, **characterizing by** comprising:
a first protective plate;
a second protective plate provided side by side with the first protective plate; and
a connecting plate configured to connect a lower end of the first protective plate with a lower end of the second protective plate,
wherein the connecting plate is installed under a connection between a lock core rod and a lock body inside the automobile door, the first protective plate is installed on a side of the lock core rod, and the second protective plate is installed on a side of the lock core rod away from the first protective plate.

2. The anti-theft bracket for automobile lock of claim 1, wherein the second protective plate extends obliquely in a direction away from the connecting plate and toward a direction gradually away from the first protective plate.

3. The anti-theft bracket for automobile lock of claim 1, wherein the first protective plate comprises:
a baffle plate, a lower end of the baffle plate being connected with the connecting plate; and
a guide plate, a lower end of the guide plate being connected with an upper end of the baffle plate,
the guide plate extends obliquely toward a direction where the second protective plate is located in a direction away from the connecting plate.

4. The anti-theft bracket for automobile lock of any one of claims 1 to 3, wherein:
at least one of the first protective plate and the second protective plate is provided with a hook structure,
the hook structure is located above the connection between the lock core rod and the lock body, and
the hook structure is configured to be hooked by a lockpicking tool to create an illusion that the connection between the lock core rod and the lock body is hooked up.

5. The anti-theft bracket for automobile lock of claim 4, wherein the hook structure on the first protective plate is a hook hole penetrating through the first protective plate.

6. The anti-theft bracket for automobile lock of claim 5, wherein the first protective plate is provided with a limiting plate at a lower wall of the hook hole, and
the limiting plate is provided on a side of the first protective plate facing the second protective plate and is provided above the connection between the lock core rod and the lock body, to prevent the lockpicking tool from entering into a place between the first protective plate and a second protective plate from the hook hole.

7. The anti-theft bracket for automobile lock of claim 6, wherein the anti-theft bracket for automobile lock is made from a sheet metal,
the hook hole and the limiting plate are formed by stamping the second protective plate, and
the limiting plate is made from a plate material corresponding to the hook hole in the second protective plate.

8. The anti-theft bracket for automobile lock of any one of claims 1 to 3, wherein the first protective plate is provided with a locking portion and a positioning portion distributed at intervals in a vertical direction, and
the positioning portion is configured to position when installed in the automobile door and the locking portion is configured to fix on the automobile door; or
the first protective plate is provided with a locking portion and the second protective plate is provided with a positioning portion, and the positioning portion is configured to position when installed in the automobile door and the locking portion is configured to fix on the automobile door.

9. The anti-theft bracket for automobile lock of claim 8, wherein the positioning portion comprises:
an extending section, an end of the extending section being connected with a side edge of either the first protective plate or the second protective plate, and
an inserting section connected with the other end of the extending section and extending downward, and the inserting section being configured to insert into the automobile door.

10. The anti-theft bracket for automobile lock of claim 8, wherein the locking portion is provided with a mounting hole for connecting with the automobile door by screws or rivets.

11. The anti-theft bracket for automobile lock of claim 8, wherein an end of the positioning portion is connected with a side edge of the first protective plate, and the other end of the positioning portion extends toward the second protective plate; or
an end of the positioning portion is connected with a side edge of the second protective plate, and the other end of the positioning portion extends toward the first protective plate.

12. The anti-theft bracket for automobile lock of claim 8, wherein the locking portion is connected with a side edge of the first protective plate and extends toward the second protective plate.

13. An automobile door, **characterized by** comprising a door body, a lock body, a lock core rod and the anti-theft bracket for automobile lock of any one of claims 1 to 12,
both the lock body and the lock core rod are provided inside the door body and the lock core rod is connected with the lock body,
a connecting plate of the anti-theft bracket for automobile lock is installed under a connection between the lock core rod and the lock body, a first protective plate of the anti-theft bracket for automobile lock is installed on a side of the lock core rod close to the lock body, and a second protective plate of the anti-theft bracket for automobile lock is installed on a side of the lock core rod away from the first protective plate.

14. The automobile door of claim 13, wherein:
the door body is provided with a shielding plate on a side of the lock core rod away from the first protective plate,
the shielding plate extends along a height direction of the door body, and
an upper end of the second protective plate extends between the shielding plate and lock core rod.

15. An automobile, **characterized by** comprising the automobile door of claim 13 or claim 14.
